# EUROPEAN PATENT APPLICATION

(11) **EP 4 112 537 A1**
(43) Date of publication of application: **04.01.2023**
(21) Application number: 20920787.7
(22) Date of filing: 29.09.2020
(51) Int. Cl.: C01B 3/02, B01J 31/22

(54) **HYDROGEN PRODUCTION METHOD**

(30) Priority: 28.02.2020 JP 2020032631
(71) Applicant: Kyoto University, Kyoto-shi, Kyoto 606-8501 (JP); Daicel Corporation, Osaka 530-0011 (JP)
(72) Inventor: FUJITA, Ken-ichi, Kyoto-shi, Kyoto 606-8501 (JP); WATANABE, Takashi, Kyoto-shi, Kyoto 606-8501 (JP); KOBAYASHI, Naoko, Kyoto-shi, Kyoto 606-8501 (JP); KITAYAMA, Kenji, Tokyo 108-8230 (JP)
(74) Representative: Grünecker Patent- und Rechtsanwälte PartG mbB
(86) International application number: PCT/JP2020/036889
(87) International publication number: WO 2021/171675

(57) **Abstract**

Provided is a method of generating hydrogen efficiently using a renewable resource as a raw material.

A method of producing hydrogen according to the present disclosure is a method in which hydrogen is generated from a saccharide in the presence of a solvent and the following catalyst:
catalyst which contains at least one metal element selected from the metal elements in Groups 8, 9, and 10.

The catalyst is preferably a complex or salt of the metal element, and particularly preferably a complex including the at least one metal element selected from the metal elements in Groups 8, 9, and 10 and at least one ligand selected from pentamethylcyclopentadienyl, cyclopentadienyl, p-cymene, and 1,5-cyclooctadiene.

As the solvent, it is preferable to use at least one selected from an organic acid and an ionic liquid.

The saccharide may be a lignin-saccharide complex, and is preferably cellulose.

## Description

### Technical Field

The present disclosure relates to a method of generating hydrogen from a saccharide. The present disclosure claims priority from the Japanese patent application No. 2020-032631, filed in Japan on February 28, 2020, the contents of which are incorporated herein by reference.

### Background Art

In recent years, hydrogen has been drawing attention as an ideal energy source from the perspective of achieving a low carbon society. There has been a demand for development of a method of producing hydrogen in a safe, efficient, and sustainable manner.

The production of hydrogen made via processes such as steam reformation of a natural gas (e.g., methane) and partial oxidation of a solid fuel including coal and/or a liquid fuel including crude oil. In other words, hydrogen is being produced using depletable fossil resources as raw materials. Replacing the raw material of the hydrogen production from depletable fossil resources to renewable resources is one of the important issues in aiming to build a society free of fossil resources in the future.

Patent Document 1 discloses an invention in which cellulose is mechanically decomposed to generate hydrogen by imparting mechanical milling treatment to the cellulose in the presence of iron powder. However, there has been an issue of poor catalytic efficiency because the method described above uses iron powder three times the weight of cellulose.

### Citation List

### Patent Document

Patent Document 1: JP 2006-312690 A

### Summary of Invention

### Technical Problem

Accordingly, an object of the present disclosure is to provide a method of generating hydrogen efficiently using a renewable resource as a raw material.

Another object of the present disclosure is to provide a hydrogen production apparatus that generates hydrogen efficiently using a renewable resource as a raw material.

Another object of the present disclosure is to provide a power generation apparatus that utilizes, as fuel, hydrogen generated using a renewable resource as a raw material.

Another object of the present disclosure is to provide an automobile that utilizes, as fuel, hydrogen generated using a renewable resource as a raw material.

Another object of the present disclosure is to provide a method of reducing an organic compound by utilizing hydrogen generated using a renewable resource as a raw material.

### Solution to Problem

As a result of diligent studies in order to solve the above-described issues, the present inventors have found that, when a predetermined metal is used as a catalyst, hydrogen can be efficiently generated from a saccharide dissolved in a solvent. The present disclosure has been completed based on these findings.

In other words, the present disclosure provides a method of producing hydrogen, the method generating hydrogen from a saccharide in the presence of a solvent and the following catalyst:
a catalyst containing at least one metal element selected from the metal elements in Groups 8, 9, and 10.

The present disclosure also provides the method of producing hydrogen, in which the catalyst is a complex or salt of the at least one metal element selected from the metal elements in Groups 8, 9, and 10.

The present disclosure also provides the method of producing hydrogen, in which the catalyst is a complex including: the at least one metal element selected from the metal elements in Groups 8, 9, and 10; and at least one ligand selected from pentamethylcyclopentadienyl, cyclopentadienyl, p-cymene, and 1,5-cyclooctadiene.

The present disclosure also provides the method of producing hydrogen, in which the solvent contains at least one selected from an organic acid and an ionic liquid.

The present disclosure also provides the method of producing hydrogen, in which a total amount of the organic acid and the ionic liquid used is from 3 to 300 times by weight of an amount of the saccharide used.

The present disclosure also provides the method of producing hydrogen, in which the solvent contains an ionic liquid and water, and a content of the water is from 1 to 20 wt.% of a total weight of the ionic liquid and the water.

The present disclosure also provides the method of producing hydrogen, in which the ionic liquid contains an imidazolium cation salt.

The present disclosure also provides the method of producing hydrogen, in which the saccharide is a lignin-saccharide complex.

The present disclosure also provides the method of producing hydrogen, in which the saccharide is cellulose.

The present disclosure also provides the method of producing hydrogen, including subjecting carbon dioxide generated together with the hydrogen to a reaction with a base for removal.

The present disclosure also provides a hydrogen production apparatus that is configured to have a function of producing hydrogen using the method of producing hydrogen.

The present disclosure also provides a power generation apparatus that is configured to have a function of producing hydrogen using the method of producing hydrogen, and generating power using the obtained hydrogen.

The present invention also provides an automobile provided with the power generation apparatus.

The present disclosure also provides a method of producing a hydride of an organic compound, the method including: producing hydrogen using the method of producing hydrogen; reducing an organic compound in the presence of a catalyst using the obtained hydrogen as a reducing agent; and producing a hydride of the organic compound.

### Advantageous Effects of Invention

In the method of producing hydrogen according to the present disclosure, hydrogen can be efficiently generated using, as a raw material, a renewable resource such as cellulose or wood powder that can be easily obtained. The generated hydrogen can then be reacted with oxygen so as to generate electrical energy. In addition, even when hydrogen is reacted with oxygen, only water is generated, and neither carbon dioxide that causes global warming nor nitrogen oxides that cause air pollution are generated.

As described above, the method of producing hydrogen can be utilized to secure energy without imparting a burden to the environment, and thus the method of producing hydrogen makes a contribution in achieving a sustainable energy society.

Furthermore, in a known method of producing hydrogen (e.g., a method of producing hydrogen through steam reformation or partial oxidation of a hydrocarbon), carbon monoxide is generated, as a byproduct, together with hydrogen, and thus is mixed in the hydrogen obtained by the method. However, carbon monoxide is a catalyst poison. Therefore, when hydrogen in which carbon monoxide has been mixed in is used as a hydrogen source, an electrode catalyst of a fuel cell deteriorates. Therefore, it has been necessary to remove the carbon monoxide that has been mixed in from the hydrogen obtained by the foregoing method. However, in the method of producing hydrogen according to the present disclosure, carbon monoxide is not generated as a byproduct, and thus it is unnecessary to remove carbon monoxide from the hydrogen obtained by the method of producing hydrogen of the present disclosure, and the deterioration in electrode catalyst can be prevented even when the obtained hydrogen is used as-is as a hydrogen source in fuel cells.

Also, a metal catalyst is sometimes used as the catalyst in a hydrogenation reaction of an organic compound. However, when the hydrogen in which carbon monoxide has been mixed in is used in the reaction as a reducing agent, performance of the metal catalyst is reduced due to the carbon monoxide. On the other hand, as described above, because hydrogen in which carbon monoxide has not been mixed in can be obtained by the method of producing hydrogen according to the present disclosure, when this hydrogen obtained by the foregoing method is used as a reducing agent, it is possible to produce a hydride of the organic compound with reduced deterioration of the catalyst even in a case where a metal catalyst is used as the catalyst.

### Description of Embodiments

### Method of producing hydrogen

The production method according to the present disclosure is a method in which hydrogen is generated from a saccharide in the presence of a solvent and the following catalyst:
catalyst which contains at least one metal element selected from the metal elements in Groups 8, 9, and 10.

### Saccharide

The saccharide is a compound in which a plurality of monosaccharides are polymerized through glycosidic bonds. Examples of the monosaccharides include glucose, mannose, xylose, galactose, N-acetyl glucosamine, N-acetyl galactosamine, and fucose.

The saccharide includes, for example, disaccharides such as sucrose, maltose, lactose, trehalose, and cellobiose; trisaccharides such as raffinose and maltotriose; tetrasaccharides such as acarbose; and polysaccharides such as cellulose, hemicellulose (including complex sugars such as xylan, mannan, glucomannan, and glucuronoxylan), chitin, starch, glycogen, agarose, and pectin.

In particular, the saccharide is preferably a polysaccharide, and particularly preferably cellulose or a cellulose decomposition product (a compound in which two or more molecules of glucose are bound, including, for example, cellobiose, cellotriose, cellotetraose, cellopentaose, and cellohexaose), from the perspective that they can be used to efficiently generate hydrogen and are easily available. Note that cellulose is a polymer of glucose, and is a compound represented by the molecular formula [(C₆H₁₀O₅)ₙ]. Cellulose is a primary component of cell walls in plant cells and plant fibers. In natural states, cellulose exists bound to hemicellulose or lignin.

The cellulose may have substituted hydrogen atoms of hydroxyl groups that bind to carbon atoms at the second position, the third position, and the sixth position, and may be, for example, a cellulose derivative such as cellulose acetate. In particular, cellulose having unsubstituted hydrogen atoms of the hydroxyl groups is preferable, from the perspective of efficient hydrogen production.

The saccharide may form a complex with lignin. In other words, the saccharide may be a lignin-saccharide complex. The lignin-saccharide complex is preferably a lignin-cellulose complex. The lignin-cellulose complex is, for example, a structure in which cellulose is partially bound to lignin via hemicellulose.

Examples of the lignin-saccharide complex include at least one plant raw material selected from wood (e.g., coniferous trees such as Japanese cedar, and broadleaved trees such as eucalyptus), seed hair (e.g., cotton linters, bombax cotton, and kapok), bast (e.g., hemp, paper mulberry, and paper bush), and stems and leaves (e.g., Manila hemp, New Zealand hemp, sugar cane, napier grass, Miscanthus, Erianthus, sorghum, rice straw, and wheat straw), pulp, or a product obtained by cutting or pulverizing these (e.g., chips and sawdust).

Examples of the pulp include chemical pulp obtained by chemically or mechanically pulping a plant raw material (e.g., wood or cotton), deinked used paper pulp, corrugated used paper pulp, magazine used paper pulp, and various types of sanitary paper (e.g., toilet paper, tissue paper, and wiper).

### Catalyst

The catalyst comprises at least one metal element selected from the metal elements in Groups 8, 9, and 10.

The metal element in Group 8 includes iron, ruthenium, and osmium.

The metal element in Group 9 includes cobalt, rhodium, and iridium.

The metal element in Group 10 includes nickel, palladium, and platinum.

In particular, the metal element is preferably the metal elements in Group 8 or Group 9, particularly preferably iridium, rhodium, or ruthenium, and especially preferably iridium, from the perspective of exhibiting high catalytic activity.

The catalyst may be the metal element alone, or may be a salt of the metal element [e.g., a halide (fluoride, chloride, bromide, or iodide), an organic acid salt (e.g., acetic acid salt, propionic acid salt, prussic acid salt, naphthenic acid salt, or stearic acid salt), or an oxoacid salt (e.g., nitric acid salt, sulfuric acid salt, phosphoric acid salt, boric acid salt, or carbonic acid salt)], an oxide of the metal element, or a hydroxide of the metal element. Also, a ligand may be bonded to the metal element to form a complex.

In particular, the catalyst is preferably a complex (which is a metal complex) in which a ligand is bonded to the metal element to form a complex, or a salt of the metal element, from the perspective of exhibiting high catalytic activity.

Examples of the ligand include cyclic ligands, cyanide (CN⁻), thiocyanate (SCN⁻), hydroxide (OH⁻), aqua (OH₂), carbonyl (CO), nitrosyl (NO⁺), nitrite (NO₂⁻), chloro (Cl⁻), phosphine (P(Ph)₃), ammine (NH₃), acetylacetonate, and ethylenediamine tetraacetate.

The cyclic ligand is a ligand having a cyclic structure of, for example, a 3 to 8 membered ring (in particular, a 5-membered ring, a 6-membered ring, or an 8-membered ring is preferable, and a 5-membered ring is particularly preferable, from the perspective of superior complex stability), and includes, for example, an N-heterocyclic ligand, an aromatic hydrocarbon ligand, and a cycloaliphatic hydrocarbon ligand.

Examples of the N-heterocyclic ligand include ligands represented by Formulas (L1) to (L4) below. The ligands represented by Formulas (L1) to (L4) below may have one or two or more substituents. Examples of the substituent include C₁₋₅ alkyl groups, halogen atoms, and C₁₋₅ alkoxyl groups.

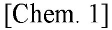

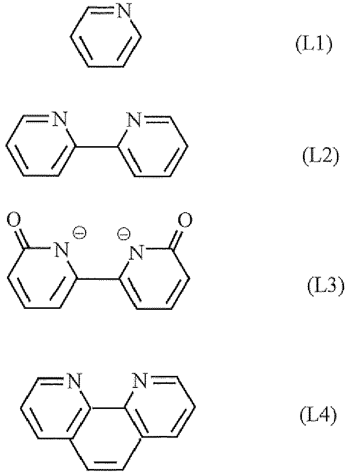

As the N-heterocyclic ligand, in particular, an N,N-bidentate ligand (for example, ligands represented by Formulas (L2) to (L4) above) is preferable from the perspective of exhibiting high catalytic activity, and particularly, a bipyridine ligand represented by Formula (L2) above or a bipyridonate-based ligand represented by Formula (L3) above is preferable. Furthermore, the bipyridine ligand or the bipyridonate ligand preferably contains a hydroxyl group as a substituent.

Examples of the aromatic hydrocarbon ligand include pentamethylcyclopentadienyl (Cp^{∗}), cyclopentadienyl (Cp), and p-cymene.

Examples of the cycloaliphatic hydrocarbon ligand include 1,5-cyclooctadiene and cyclooctatetraene.

It is preferable that the ligand include a cyclic ligand from the perspective of exhibiting high catalytic activity. In particular, the ligand preferably includes an aromatic hydrocarbon ligand or a cycloaliphatic hydrocarbon ligand. In particular, the ligand includes at least one cyclic ligand selected from pentamethylcyclopentadienyl (Cp^{∗}), cyclopentadienyl (Cp), p-cymene, and 1,5-cyclooctadiene.

It is preferable that the ligand include a cyclic ligand from the perspective of exhibiting high catalytic activity. The ligand preferably includes an N-heterocyclic ligand.

As the ligand, the following aspect 1 or 2 is preferable from the perspective of exhibiting high catalytic activity.
1. The ligand includes a combination of an aromatic hydrocarbon ligand or an alicyclic hydrocarbon ligand (in particular at least one ligand selected from pentamethylcyclopentadienyl (Cp^{∗}), cyclopentadienyl (Cp), p-cymene and 1,5-cyclooctadiene) and an N-heterocyclic ligand.
2. The ligand includes a combination of an aromatic hydrocarbon ligand or an alicyclic hydrocarbon ligand (in particular at least one ligand selected from pentamethylcyclopentadienyl (Cp^{∗}), cyclopentadienyl (Cp), p-cymene and 1,5-cyclooctadiene) and chloro (Cl⁻).

As the catalyst having the ligand according to the above aspect 1, a compound represented by Formula (c1) or (c2) below (which is a metal complex) is preferable, and, in particular, a compound represented by Formula (c1) below (which is a metal complex) is preferable: 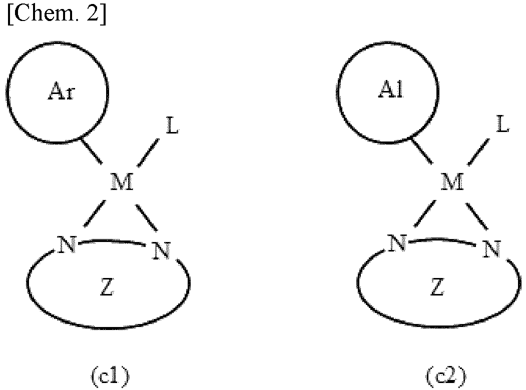 where M represents a metal element in Group 9, Ar represents an aromatic hydrocarbon ligand, and Al indicates a cycloaliphatic hydrocarbon ligand. Ring Z represents N,N-bidentate ligand. L is a ligand selected from cyanide, thiocyanate, hydroxide, aqua, carbonyl, nitrosyl, nitrite, chloro, phosphine, ammine, acetylacetonate, and ethylenediamine tetraacetate, or is absent.

In particular, the compound represented by Formula (c1) or (c2) above is preferably a compound in which Ring Z in the formula is bipyridine or bipyridonate.

Furthermore, in particular, the compound represented by Formula (c1) above is preferably a compound in which Ar in the formula is an aromatic tridentate ligand, and particularly preferably a compound in which Ar in the formula is pentamethylcyclopentadienyl (Cp^{∗}) or cyclopentadienyl (Cp).

The compound represented by Formula (c1) above is preferably a compound represented by the following formula (c1-1), (c1-1'), (c1-1"), (c1-2), or (c1-2'). In the following Formulas, R¹¹ to R14 are the same or different, and represent hydrogen atoms or monovalent hydrocarbon groups:

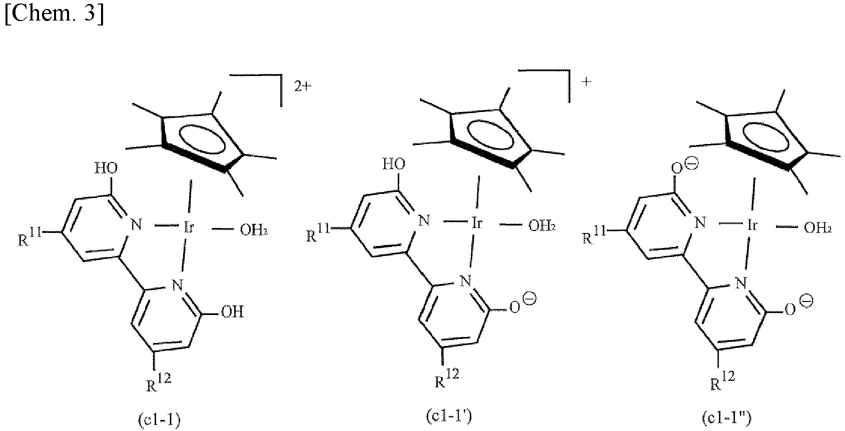

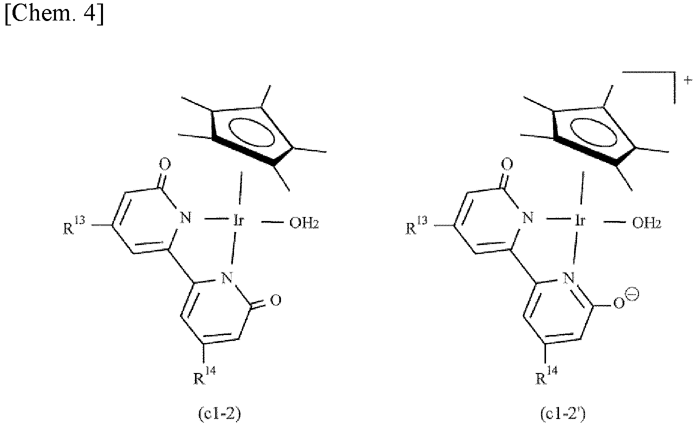

As the catalyst having the ligand according to the above aspect 2, a compound represented by Formula (c3) or (c4) below is preferable, and, in particular, a compound represented by Formula (c3) below (which is a metal complex) or a multimer of the metal complex is preferable. 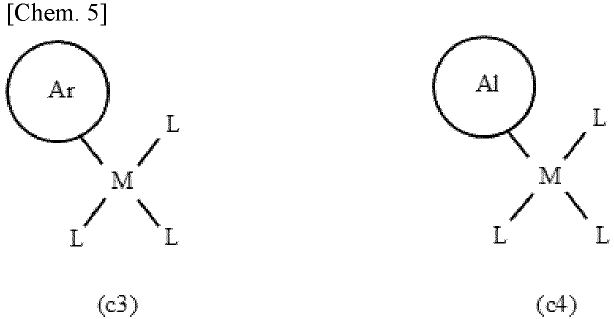 where M represents a metal element in Group 9, Ar represents an aromatic hydrocarbon ligand, and Al indicates a cycloaliphatic hydrocarbon ligand. L represents a ligand selected from cyanide, thiocyanate, hydroxide, aqua, carbonyl, nitrosyl, nitrite, chloro, phosphine, ammine, acetylacetonate, and ethylenediamine tetraacetate.

The multimer of the metal complex is, for example, a dimer of the metal complex. A dimer of the compound represented by Formula (c3) or (c4) above is a compound represented by Formula (c3') or (c4') below. Note that Ar, Al, M, and L in the following formulas are the same as defined above.

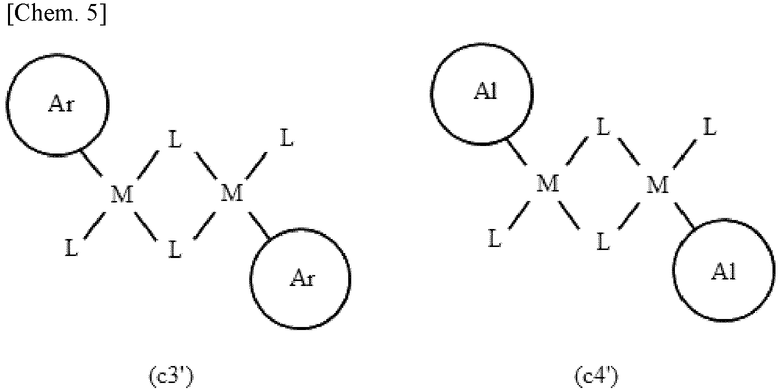

In particular, the compound represented by Formula (c3) or (c3') above is preferably a compound in which Ar in the formula is an aromatic tridentate ligand, and particularly preferably a compound in which Ar in the formula is pentamethylcyclopentadienyl (Cp^{∗}) or cyclopentadienyl (Cp).

The metal complex or the multimer of the metal complex may form a salt. That is, it may be a metal complex salt. Examples of the metal complex salt include trifluoromethanesulfonic acid salts (which are salts with trifluoromethanesulfonate (TfO⁻)), tetrafluoroboric acid salts, and hexafluorophosphoric acid salts.

Furthermore, the metal complex or the multimer of the metal complex may be a tautomer or a stereoisomer.

### Solvent

The solvent may be a solvent that dissolves at least a part of the saccharide and the catalyst. Examples of the solvent include water; organic acids; Ionic liquids; dimethylsulfoxide; amide solvents such as N,N-dimethylformamide and N,N-dimethylacetamide; alcohol solvents such as methanol and ethanol; ester solvents such as ethyl acetate; ether solvents such as tetrahydrofuran; hydrocarbons such as toluene, benzene, and cyclohexane; and halogen solvents such as methylene chloride and dichloroethane. One of these can be used alone or two or more in combination.

In particular, the solvent preferably contains at least one selected from organic acids and ionic liquids, from excellent dissolution of the saccharide and the catalyst.

Examples of the organic acid include short chain fatty acids having 7 or less carbon atoms (preferably 3 or less carbon atoms), such as formic acid, acetic acid, and propionic acid.

The ionic liquid is a salt composed of an anion and a cation, and is a liquid substance at room temperature namely 25°C.

Examples of the anion constituting the ionic liquid include acetate anion, RfOSO₃⁻, p-CH₃C₆H₄SO₃⁻ (tosylate anion), RfSO₃⁻, (RfSO₂)₂N⁻, BF₄⁻, PF₆⁻, (RfSO₂)₃C⁻, (CN)₂N⁻, and (RfO)₂PO₂⁻. Note that Rf represents a halogenated alkyl group having from 1 to 12 carbon atoms.

In particular, the anion is preferably acetate anion from the perspective of providing excellent dissolution of the saccharide and the catalyst and exhibiting an effect for promoting progression of a reaction for generating hydrogen from the saccharide.

Examples of the cation constituting the ionic liquid include organonitrogen cations such as imidazolium cations, pyridinium cations, pyrrolidinium cations, and ammonium cations; organophosphorus cations such as phosphonium cations; and organosulfur cations such as sulfonium cations.

In particular, the cation constituting the ionic liquid is preferably imidazolium cation from the perspective of providing excellent dissolution of the saccharide and the catalyst and exhibiting an effect for promoting progression of a reaction for generating hydrogen from the saccharide.

Accordingly, the ionic liquid is preferably an imidazolium salt represented by Formula (i) below: 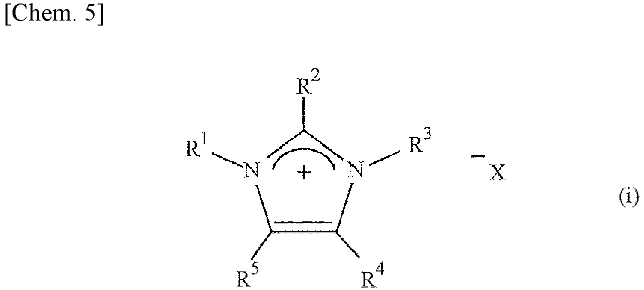 where in Formula (i), R¹ and R³ are the same or different, and represent monovalent hydrocarbon groups, and R², R⁴ and R⁵ are the same or different, and represent hydrogen atoms or monovalent hydrocarbon groups. X⁻ represents a counter anion.

The monovalent hydrocarbon group includes a monovalent aliphatic hydrocarbon group, a monovalent alicyclic hydrocarbon group, a monovalent aromatic hydrocarbon group, and a monovalent group bonded thereto. Furthermore, the monovalent hydrocarbon group may have a substituent such as a carboxyl group (-COOH), a sulfonic acid group (-SO₃H), or a phosphoric acid group (H₂PO₄⁻).

The monovalent aliphatic hydrocarbon groups is preferably an aliphatic hydrocarbon group having from 1 to 20 carbon atoms, and can include, for example, linear or branched alkyl groups having from 1 to 20 (preferably from 1 to 10, and particularly preferably from 1 to 5) carbon atoms, such as a methyl group, an ethyl group, a propyl group, an isopropyl group, a butyl group, an isobutyl group, an s-butyl group, a t-butyl group, a pentyl group, a hexyl group, a decyl group, and a dodecyl group; linear or branched alkenyl groups having from 2 to 20 (preferably from 2 to 10, and particularly preferably from 2 to 3) carbon atoms, such as a vinyl group, an allyl group, and a 1-butenyl group; and linear or branched alkynyl groups having from 2 to 20 (preferably from 2 to 10, and particularly preferably from 2 to 3) carbon atoms, such as an ethynyl group and a propynyl group.

The monovalent alicyclic hydrocarbon group is preferably a C₃₋₂₀-membered alicyclic hydrocarbon group, and can include, for example, 3- to 20-membered (preferably 3- to 15-membered and particularly preferably 5- to 8-membered) cycloalkyl groups, such as a cyclopropyl group, a cyclobutyl group, a cyclopentyl group, a cyclohexyl group, and a cyclooctyl group; 3- to 20-membered (preferably 3-to 15-membered and particularly preferably 5- to 8-membered) cycloalkenyl groups, such as a cyclopentenyl group and a cyclohexenyl group; and bridged cyclic hydrocarbon groups, such as a perhydronaphthalen-1-yl group, a norbornyl group, an adamantyl group, a tricyclo[5.2.1.0^{2,6}]decane-8-yl group, and a tetracyclo[4.4.0.1^{2,5}.1^{7,10}]dodecane-3-yl group.

Examples of the monovalent aromatic hydrocarbon group include C₆₋₁₄ (particularly, C₆₋₁₀) aromatic hydrocarbon groups, and examples thereof include phenyl groups and naphthyl groups.

In particular, the monovalent hydrocarbon group is preferably a monovalent aliphatic hydrocarbon group, and particularly preferably a linear or branched alkyl group or a linear or branched alkenyl group.

R¹ is preferably a monovalent aliphatic hydrocarbon group, particularly preferably a linear or branched alkyl group, and most preferably a linear alkyl group, from the perspective of providing excellent dissolution of the saccharide and the catalyst and exhibiting an effect for promoting progression of a reaction for generating hydrogen from the saccharide. Also, a number of carbon atoms of the aliphatic hydrocarbon group and the alkyl group is preferably 1 to 3, and particularly preferably 1 or 2.

R³ is preferably a monovalent aliphatic hydrocarbon group, particularly preferably a linear or branched alkyl group, and most preferably a linear alkyl group, from the perspective of providing excellent dissolution of the saccharide and the catalyst and exhibiting an effect for promoting progression of a reaction for generating hydrogen from the saccharide. Also, the number of carbon atoms of the aliphatic hydrocarbon group and the alkyl group is preferably from 1 to 5, and particularly preferably from 3 to 5.

The counter anion represented by X⁻ includes examples similar to those of the anion constituting the ionic liquid. In particular, the counter anion is preferably acetate anion from the perspective of providing excellent dissolution of the saccharide and the catalyst and exhibiting an effect for promoting progression of a reaction for generating hydrogen from the saccharide.

### Method of producing hydrogen

The production method according to the present disclosure is a method in which hydrogen is generated from the saccharide in the presence of the catalyst and the solvent described above. Note that the saccharide as a substrate includes a lignin-saccharide complex.

An amount of the catalyst used (which is an amount in terms of metal element) is, for example, from 0.02 to 10 mol%, preferably from 0.2 to 2 mol% of the saccharide. Alternatively, the amount is, for example, from 0.1 to 50 parts by weight, preferably from 1 to 10 parts by weight, based on 100 parts by weight of the saccharide.

An amount of the solvent used [when two or more solvents are used, a total amount thereof, preferably a total amount of the organic acid and the ionic liquid (an amount of either the organic acid or the ionic liquid used may be zero)] is, for example, from 3 to 300 times by weight of an amount of the saccharide used.

When an organic acid is used as the solvent, an amount of the organic acid used is, for example, from 3 to 300 parts by weight, preferably from 50 to 250 parts by weight, particularly preferably from 100 to 250 parts by weight, and especially preferably from 150 to 250 parts by weight, based on 1 part by weight of the saccharide.

When an ionic liquid is used as the solvent, an amount of the ionic liquid used is, for example, from 0.5 to 30 parts by weight, based on 1 part by weight of the saccharide. A lower limit on the amount of the ionic liquid used is preferably 3 parts by weight, particularly preferably 4 parts by weight, and most preferably 5 parts by weight. The upper limit on the amount of the ionic liquid used is preferably 15 parts by weight, more preferably 10 parts by weight, and particularly preferably 8 parts by weight. In the production method according to the present disclosure, the amount of the ionic liquid used is small, which is economical.

When the ionic liquid is used as the solvent, the use of water together with the ionic liquid is preferable from the perspective of providing excellent dissolution of the saccharide and the catalyst and obtaining an effect for promoting progression of a reaction for generating hydrogen from the saccharide.

An amount of water used is, for example, 20 wt.% or less, preferably from 1 to 20 wt.%, more preferably more than 2 wt.% and 20 wt.% or less, particularly preferably from 3 to 20%, most preferably from 5 to 18%, and especially preferably from 7 to 17 wt.% based on a total amount of the ionic liquid and water used (100 wt.%).

Also, the amount of water used is, for example, from 0.1 to 5 parts by weight, based on 1 part by weight of the saccharide. The upper limit on the amount of water used is preferably 0.2 parts by weight, and particularly preferably 0.3 parts by weight. The upper limit on the amount of the ionic liquid used is preferably 3 parts by weight, and particularly preferably 2 parts by weight.

When the ionic liquid and water are used as the solvent, and the catalyst having the ligand of the above aspect 1 is used, the amount of water used is, for example, 5 parts by weight or less, based on 1 part by weight of the saccharide. The upper limit on the amount of water used is preferably 3 parts by weight, particularly preferably 1.5 parts by weight, most preferably 1.2 parts by weight, and especially preferably 1.0 part by weight, from the perspective of increasing an opportunity for the saccharide and the catalyst to come into contact with each other, and efficiently performing the reaction for generating hydrogen from the saccharide. The lower limit on the amount of water used is preferably 0.15 parts by weight, more preferably 0.25 parts by weight, even more preferably 0.3 parts by weight, particularly preferably 0.35 parts by weight, and especially preferably 0.4 parts by weight, from the perspective of obtaining the effect for improving yield of hydrogen.

When the ionic liquid and water are used as the solvent, and the catalyst having the ligand of the above aspect 2 is used, the amount of water used is, for example, 5 parts by weight or less, more preferably 2 parts by weight or less, particularly preferably 1 part by weight or less, and most preferably 0.7 parts by weight or less, based on 1 part by weight of the saccharide. The lower limit on the amount of water used is preferably 0.05 parts by weight, more preferably 0.1 parts by weight, and even more preferably 0.2 parts by weight, from the perspective of obtaining the effect for improving the yield of hydrogen.

When a lignin-saccharide complex is used as the substrate, the amounts of the catalyst and the solvent used may be determined depending on the weight of the saccharide contained in the lignin-saccharide complex.

The reaction atmosphere is not particularly limited as long as the reaction is not inhibited, and may be, for example, any of the following: an air atmosphere, an inert gas atmosphere (for example, a nitrogen atmosphere or an argon atmosphere), a hydrogen atmosphere, or the like.

The reaction temperature is, for example, from 60 to 150°C. The reaction may be performed under reflux conditions of the solvent. A reaction time is, for example, approximately from 0.5 to 50 hours.

The reaction may be performed under ambient pressure, increased pressure, or reduced pressure.

The reaction can be carried out by a batch method, a semi-batch method, or a continuous method.

The saccharide is decomposed into hydrogen and carbon dioxide via the reaction. Accordingly, the gas obtained by the reaction contains hydrogen and carbon dioxide. When a step of trapping the gas with a base (for example, a basic aqueous solution such as an aqueous sodium hydroxide solution) is provided, the carbon dioxide is removed from the gas by subjecting the carbon dioxide to a reaction with the base in the step. This results in high purity hydrogen.

According to the method of producing hydrogen, hydrogen can be generated in an amount of, for example, 0.5 mol or greater (an upper limit is, for example, 3 mol), and preferably 0.55 mol or greater per mole of the monosaccharide constituting the saccharide.

Carbon monoxide is a catalyst poison, and is known to reduce the catalytic function. Carbon monoxide is also known to be bound to an electrode catalyst (e.g., a platinum electrode catalyst) of a fuel cell and deteriorate the electrode catalyst. However, the hydrogen obtained by the method does not contain carbon monoxide. Thus, when the hydrogen is used, it is possible to suppress deterioration in electrode catalyst and enable efficient progression of the hydrogenation reaction. Furthermore, when the hydrogen obtained by the method is used as a hydrogen source of a fuel cell, it is possible to suppress deterioration in electrode catalyst and suppress deterioration in fuel cell.

### Hydrogen production apparatus

The hydrogen production apparatus according to the present disclosure has a function of producing hydrogen using the method of producing hydrogen described above.

According to the hydrogen production apparatus, hydrogen can be efficiently generated using a renewable resource as a raw material.

In addition, the method of producing hydrogen described above does not generate carbon monoxide as a byproduct. Therefore, the hydrogen production apparatus does not need to have a function of removing carbon monoxide from hydrogen. Accordingly, the apparatus can be downsized as compared with a known hydrogen production apparatus provided with a function of removing carbon monoxide from hydrogen.

### Power generation apparatus

The power generation apparatus according to the present disclosure is an apparatus that produces hydrogen using the above-described method of producing hydrogen and generates power using the obtained hydrogen.

The power generation apparatus is preferably provided with the hydrogen production apparatus as a means for producing hydrogen using the above-described method of producing hydrogen.

Further, the power generation apparatus is preferably provided with a fuel cell as a means for generating power using hydrogen. The fuel cell has a function of reacting hydrogen and oxygen to generate electrical energy.

According to the power generation apparatus, only water is generated during power generation, and neither carbon dioxide that causes global warming nor nitrogen oxides that cause air pollution are evolved. Therefore, the power generation apparatus is environmentally friendly.

### Automobile

The automobile according to the present disclosure is provided with the power generation apparatus. In more detail, the automobile has a function of producing hydrogen using the above-described method of producing hydrogen, and a function of generating power using the obtained hydrogen. The automobile further has a function to be driven using electrical energy.

The automobile is preferably a fuel cell automobile.

In the automobile, only water is generated during power generation, and neither carbon dioxide that causes global warming nor nitrogen oxides that cause air pollution are evolved. Therefore, the automobile is environmentally friendly.

### Method of producing hydride of organic compound

The method of producing a hydride of an organic compound according to the present disclosure includes: producing hydrogen using the above-described method of producing hydrogen; reducing an organic compound in the presence of a catalyst using the obtained hydrogen as a reducing agent; and producing a hydride of the organic compound.

Examples of the organic compound include alkenes, alkynes, ketones, and aldehydes.

For example, when the organic compound is an alkene, the hydride of the organic compound is an alkane corresponding to the alkene.

For example, when the organic compound is an alkyne, the hydride of the organic compound is an alkene and/or an alkane corresponding to the alkyne.

For example, in a case where the organic compound (R-CO-R'; R and R' are the same or different and represent hydrocarbon groups), the hydride of the organic compound is a secondary alcohol (R-CHOH-R'; R and R' are the same as defined above).

For example, in a case where the organic compound is an aldehyde (R"-CO-H; R" represents a hydrogen atom or hydrocarbon group), the hydride of the organic compound is a primary alcohol (R"-CH2-OH; R" is the same as defined above).

Examples of the alkene include linear or branched alkenes having from 2 to 20 (preferably, from 4 to 15) carbon atoms.

Examples of the hydrocarbon groups in R, R' and R"include linear or branched alkyl groups having from 1 to 10 carbon atoms.

The catalyst may be a catalyst capable of promoting a reaction for reducing the organic compound with hydrogen. Examples of the catalyst include a metal catalyst containing at least one metal element selected from the metal elements in Groups 8, 9, and 10. The metal catalyst may be any of a metal element alone, a metal element salt, a metal element oxide, a metal element hydroxide, a metal element complex, or the like.

The metal catalyst decreases in performance due to carbon monoxide, and thus it is difficult to use it in the reaction in which carbon monoxide is generated as a byproduct. However, according to the method of producing hydrogen described above, it is possible to use the metal catalyst because carbon monoxide is not generated as a byproduct. The reaction for reducing the organic compound with hydrogen in the presence of the metal catalyst makes it possible to efficiently produce the hydride of the organic compound.

The amount of the catalyst used is, for example, approximately from 1 to 10 mol% of the organic compound.

The reaction for reducing the organic compound may be performed in the presence of a solvent. As the solvent, for example, aromatic hydrocarbons such as toluene, xylene, benzene, and ethyl benzene can be suitably used.

An amount of hydrogen used is, for example, from 0.1 to 10 mol based on 1 mol of the organic compound.

A reaction temperature of the reaction for reducing the organic compound is, for example, approximately from 0 to 200°C.

A reaction atmosphere for the reaction for reducing the organic compound is not particularly limited as long as the reaction is not inhibited, and may be, for example, any of an air atmosphere, a nitrogen atmosphere, an argon atmosphere, or the like.

Each of the configurations, their combinations, and the like of the present disclosure above is an example, and an addition, an omission, a substitution, and a change of the configuration can be appropriately made without departing from the gist of the present disclosure. In addition, the present disclosure is not limited by the embodiments and is limited only by the claims.

### Examples

Hereinafter, the present disclosure will be described more specifically with reference to examples, but the present disclosure is not limited by these examples.

### Preparation Example 1 (preparation of Cp^{∗} iridium 6,6'-dihydroxy-2,2'-bipyridine complex)

0.60 mol of a complex Cp^{∗} iridium tris-aqua complex [Cp^{∗} Ir(H₂O)₃](OTf)₂ was dissolved in 12 mL of water, 0.60 mol of 6,6'-dihydroxy-2,2'-bipyridine was added thereto at room temperature, and then the mixture was stirred for 30 minutes. Water was distilled off, and a catalyst (1) represented by the following formula (c1-I) ([Cp^{∗}Ir(6,6'-dihydroxy-2,2'-bipyridine)(H₂O)](OTf)₂ complex).

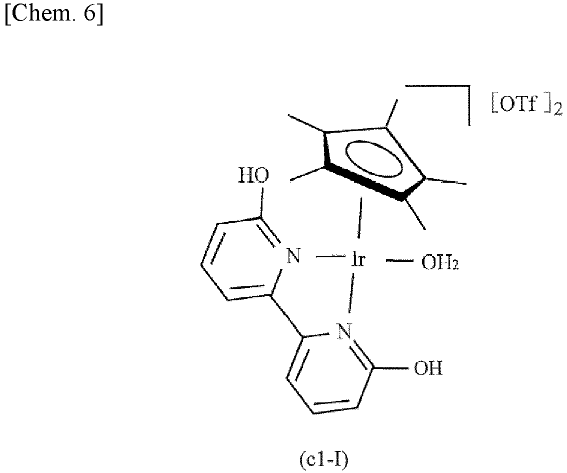

### Example 1

A two-neck flask (volume: 30 mL) was charged with 1-butyl-3-methylimidazolium acetate (5.0 g) as an ionic liquid, which was vacuum-dried for 30 minutes.

Thereafter, the air in the vessel was replaced with argon gas, then the vessel was charged with cellulose (1.0 g, 6.2 mmol as a glucose unit) and stirred at 100°C for 30 minutes.

Subsequently, the catalyst (1) obtained in Preparation Example 1 (1.0 mol%, 51 mg, 12 mg in terms of metal element) and water (1.0 g) were added to the vessel, which then was heated in an oil bath at 135°C and stirred for 24 hours in a state where the solvent was being refluxed.

The gas evolved by the reaction described above was collected in a gas burette (maximum volume: 500 mL) and the volume was measured. Also, the purity and yield of the generated hydrogen were calculated by performing a gas chromatograph analysis.

Note that the yield was calculated on the premise that the yield when one molecule of hydrogen was evolved per unit of glucose constituting cellulose was 100%.

### Example 1-1

The same procedure as in Example 1 was performed except that a trap containing 10 mol/L of an aqueous NaOH solution was provided between the reaction vessel and the gas burette.

As a result, carbon dioxide was trapped in the trap, and 80 mL of highly pure hydrogen could be collected in the gas burette (yield: 53%). The hydrogen yield was approximately the same as the hydrogen yield in the absence of trap (i. e., Example 1).

### Examples 2 to 6

The same procedure as in Example 1 was performed except that the amounts of the ionic liquid and water used were changed as indicated in Table 1.

### [Table 1]

**Table 1**

| | H₂O (g) | Ionic Liquid (g) | Amount of Gas | H₂: CO₂ (Volume ratio) | Amount of H₂ (mL) | Yield of H₂ (%) |
|---|---|---|---|---|---|---|
| Example 1 | 1.0 | 5.0 | 131 mL (5.5 mmol) | 63:37 | 83 | 56 |
| Example 2 | 1.0 | 10.0 | 100 mL (4.1 mmol) | 75:25 | 75 | 50 |
| Example 3 | 0.50 | 5.0 | 131 mL (5.5 mmol) | 62:38 | 81 | 55 |
| Example 4 | 0.30 | 5.0 | 122 mL (5.1 mmol) | 63:37 | 77 | 52 |
| Example 5 | 0.10 | 5.0 | 101 ml (4.2 mmol) | 66:34 | 67 | 45 |
| Example 6 | 0 | 5.0 | 89 (3.7 mmol) | 79:21 | 70 | 47 |

### Example 7

Ball-milled Japanese cedar wood powder (100 mg) was fully dissolved in 80% (v/v) formic acid (10 mL). Next, the catalyst (1) obtained in Preparation Example 1 (13 mg, 3 mg in terms of metal element) was added, and reacted for 1 hour at 100°C. As a result, 450 mL of hydrogen was evolved.

### Example 8

The same procedure as in Example 7 was performed except that eucalyptus wood powder was used in place of the Japanese cedar wood powder, and that the reaction temperature was changed to 90°C. As a result, 600 mL of hydrogen was evolved.

### Example 9

A two-neck flask (volume: 30 mL) was charged with 1-butyl-3-methylimidazolium acetate ([BMIM][OAc]) (5.0 g) as an ionic liquid, which was vacuum-dried for 30 minutes.

Thereafter, the air in the vessel was replaced with argon gas, 1.0 g of crystalline cellulose (particle size: 50 µm or less, trade name "Avicel PH-101", SIGMA-ALDRICH, Co.), 6.2 mmol as a glucose unit) was then added to the vessel, and the mixture was stirred at 100°C for 30 minutes.

Subsequently, an iridium chloride (III)·hydrate (1.0 mol%; amount in terms of metal element) as the catalyst and water (0.50 mL) were added to the vessel, heated in an oil bath at 135°C, and stirred for 24 hours in a state where the solvent was refluxed.

The gas evolved in the above reaction was bubbled into 10 mol/L of an aqueous NaOH solution, carbon dioxide in the gas was trapped, then the gas was collected in a gas burette (maximum volume: 500 mL), and the volume thereof was measured. In addition, the yield of the generated hydrogen was calculated by performing a gas chromatograph analysis.

### Examples 10 to 14; Comparative Example 1

The same procedure as in Example 9 was performed except that the reaction conditions were changed as indicated in Table 2. The reaction was performed without use of a catalyst in Comparative Example 1.

### [Table 2]

**Table 2**

| | Catalyst | H₂O (g) | Ionic Liquid | Amount of H₂ (mL) | Yield of H₂ (%) |
|---|---|---|---|---|---|
| Example 9 | IrC₃•nH₂O | 0.5 | [BMIM][OAc] | 63 | 42 |
| Example 10 | [Ir(cod)Cl₂]₂ | 0.5 | [BMIM][OAc] | 63 | 42 |
| Example 11 | [Cp^{∗}IrCl₂]₂ | 0.5 | [BMIM][OAc] | 90 | 60 |
| Example 12 | [Ru(*p*-cymene)Cl₂]₂ | 0.5 | [BMIM][OAc] | 70 | 47 |
| Example 13 | [Cp^{∗}RhCl₂]₂ | 0.5 | [BMIM][OAc] | 73 | 49 |
| Example 14 | [Cp^{∗}IrCl₂]₂ | 0.5 | [EMIM][OAc] | 87 | 59 |
| Comparative Example 1 | - | 0.5 | [BMIM][OAc] | 2 | 1 |

### Catalyst

[Ir(cod)Cl₂]₂: bis(1,5-cyclooctadiene) iridium (I) dichloride
[Cp^{∗}IrCl₂]₂: (pentamethylcyclopentadienyl) iridium (III) dichloride (dimer)
[Ru(p-cymene)Cl₂]₂: (p-cymene) ruthenium (II) dichloride (dimer)
[Cp^{∗}RhCl₂]₂: (pentamethylcyclopentadienyl) rhodium (III) dichloride (dimer)

### Ionic liquid

[EMIM][OAc]: 1-ethyl-3-methylimidazolium acetate

### Examples 15 to 19

The same procedure as in Example 11 was performed except that the reaction conditions were changed as indicated in Table 3.

### [Table 3]

**Table 3**

| | [BMIM][OAc] (g) | H₂O (g) | Amount of H₂ (mL) | Yield of H₂ (%) |
|---|---|---|---|---|
| Example 15 | 3.0 | 0.50 | 77 | 52 |
| Example 16 | 5.0 | 0.70 | 90 | 60 |
| Example 11 | 5.0 | 0.50 | 90 | 60 |
| Example 17 | 5.0 | 0.30 | 87 | 58 |
| Example 18 | 5.0 | 0.00 | 78 | 52 |
| Example 19 | 7.0 | 0.50 | 86 | 58 |

### Examples 20 to 22

The same procedure as in Example 11 was performed except that the reaction conditions were changed as indicated in Table 4.

### [Table 4]

**Table 4**

| | substrate | H₂O (g) | [BMIM] [OAc] (g) | Amount of H₂ (mL) | Yield of H₂ (%) |
|---|---|---|---|---|---|
| Example 11 | cellulose | 0.50 | 5.0 | 90 | 60 |
| Example 20 | cellobiose | 0.50 | 5.0 | 88 | 61 |
| Example 21 | acethyl cellulose (degree of acetylation=2.4) | 0.50 | 5.0 | 37 | 32 |
| Example 22 | toilet paper | 0.50 | 10.0 | 41 | - |

### Example 23

Hydrogen was generated in the same manner as in Example 11.

The generated hydrogen (3.7 mmol) and 1-decene (10.0 mmol) were reacted at 60°C in the presence of tris(triphenylphosphine) rhodium (I) chloride (5.0 mol%) and benzene (5.0 mL). As a result, decane (3.5 mmol, yield based on hydrogen: 95%) was obtained.

### Example 24

Hydrogen was evolved in the same manner as in Example 11. The evolved gas was collected in a gas tank without removing carbon dioxide. Hydrogen in the gas tank was injected into a PEM fuel cell coupled to an LED. As a result, the LED emitted light.

### Example 25

Hydrogen was evolved in the same manner as in Example 11. The evolved gas was collected in a gas tank without removing carbon dioxide. Hydrogen in the gas tank was injected into a PEM fuel cell coupled to a motor. As a result, the motor rotated.

As a summary of the above, configurations and variations of the present disclosure are described below.
[1] A method of producing hydrogen, the method including generating hydrogen from a saccharide in the presence of a solvent and the following catalyst:
   a catalyst containing at least one metal element selected from the metal elements in Groups 8, 9, and 10.
[2] The method of producing hydrogen according to [1], wherein the catalyst is a complex or salt of the at least one metal element selected from the metal elements in Groups 8, 9, and 10.
[3] The method of producing hydrogen according to [1], wherein the catalyst is a complex including: the at least one metal element selected from the metal elements in Groups 8, 9, and 10; and at least one ligand selected from pentamethylcyclopentadienyl, cyclopentadienyl, p-cymene, and 1,5-cyclooctadiene.
[4] The method of producing hydrogen according to [1], wherein the catalyst is at least one compound selected from compounds represented by Formula (c1), Formula (c2), Formula (c3), Formula (c4), Formula (c3'), and Formula (c4').
[5] The method of producing hydrogen according to [1], wherein the catalyst is a compound represented by Formula (c1) or Formula (c2).
[6] The method of producing hydrogen according to [1], wherein the catalyst is at least one compound selected from compounds represented by Formula (c3), Formula (c4), Formula (c3'), and Formula (c4').
[7] The method of producing hydrogen according to [1], wherein the catalyst is at least one compound selected from compounds represented by Formula (c1-1), Formula (c1-1'), Formula (c1-1"), Formula (c1-2), and Formula (c1-2').
[8] The method of producing hydrogen according to any one of [1] to [7], wherein the solvent contains at least one selected from an organic acid and an ionic liquid.
[9] The method of producing hydrogen according to any one of [1] to [8], wherein the solvent contains an ionic liquid and water, and a content of the water is from 1 to 20 wt.% of a total weight of the ionic liquid and the water.
[10] The method of producing hydrogen according to [8] or [9], wherein a total amount of the organic acid and the ionic liquid used is from 3 to 300 times by weight of an amount of the saccharide used.
[11] The method of producing hydrogen according to any one of [8] to [10], wherein the ionic liquid contains an imidazolium cation salt.
[12] The method of producing hydrogen according to any one of [8] to [10], wherein the ionic liquid is an imidazolium salt represented by Formula (i).
[13] The method of producing hydrogen according to any one of [8] to [12], wherein an anion constituting the ionic liquid is an acetate anion.
[14] The method of producing hydrogen according to any one of [1] to [13], wherein the saccharide is cellulose.
[15] The method of producing hydrogen according to any one of [1] to [14], wherein the saccharide is a lignin-saccharide complex.
[16] The method of producing hydrogen according to any one of [1] to [15], including subjecting carbon dioxide that has been generated together with the hydrogen to a reaction with a base for removal.
[17] A hydrogen production apparatus that is configured to have a function of producing hydrogen using the method of producing hydrogen described in any one of [1] to [16].
[18] A power generation apparatus that is configured to have a function of producing hydrogen using the method of producing hydrogen described in any one of [1] to [16], and generating power using the obtained hydrogen.
[19] An automobile including the power generation apparatus described in [18].
[20] A fuel cell automobile including the power generation apparatus described in [18].
[21] A fuel cell that generates electricity using hydrogen obtained by the method of producing hydrogen described in any one of [1] to [16].
[22] A method of producing a hydride of an organic compound, the method including: producing hydrogen using the method of producing hydrogen described in any one of [1] to [16]; reducing an organic compound in the presence of a metal catalyst using the obtained hydrogen as a reducing agent; and producing a hydride of the organic compound.

### Industrial Applicability

According to the method of producing hydrogen according to the present disclosure, hydrogen can be efficiently generated using, as a raw material, a renewable resource such as cellulose or wood powder that can be easily obtained. The generated hydrogen can then be reacted with oxygen to generate electricity.

Accordingly, in the foregoing method of producing hydrogen, it is possible to secure energy while reducing the environmental burden, and to achieve a sustainable energy society.

## Claims

1. A method of producing hydrogen comprising generating hydrogen from a saccharide in presence of a solvent and the following Catalyst:
Catalyst: a catalyst containing at least one metal element selected from the metal elements in Groups 8, 9, and 10.

2. The method of producing hydrogen according to claim 1, wherein the catalyst is a complex or salt of the at least one metal element selected from the metal elements in Groups 8, 9, and 10.

3. The method of producing hydrogen according to claim 1, wherein the catalyst is a complex comprising: the at least one metal element selected from the metal elements in Groups 8, 9, and 10; and at least one ligand selected from pentamethylcyclopentadienyl, cyclopentadienyl, p-cymene, and 1,5-cyclooctadiene.

4. The method of producing hydrogen according to any one of claims 1 to 3, wherein the solvent comprises at least one selected from an organic acid and an ionic liquid.

5. The method of producing hydrogen according to claim 4, wherein a total amount of the organic acid and the ionic liquid used is from 3 to 300 times by weight of an amount of the saccharide used.

6. The method of producing hydrogen according to any one of claims 1 to 3, wherein the solvent contains an ionic liquid and water, and a content of the water is from 1 to 20 wt.% of a total weight of the ionic liquid and the water.

7. The method of producing hydrogen according to any one of claims 4 to 6, wherein the ionic liquid comprises an imidazolium cation salt.

8. The method of producing hydrogen according to any one of claims 1 to 7, wherein the saccharide is a lignin-saccharide complex.

9. The method of producing hydrogen according to any one of claims 1 to 8, wherein the saccharide is cellulose.

10. The method of producing hydrogen according to any one of claims 1 to 9, comprising subjecting carbon dioxide that has been generated together with the hydrogen to a reaction with a base for removal.

11. A hydrogen production apparatus that is configured to have a function of producing hydrogen using the method of producing hydrogen described in any one of claims 1 to 10.

12. A power generation apparatus that is configured to have a function of producing hydrogen using the method of producing hydrogen described in any one of claims 1 to 10 and generating power using the obtained hydrogen.

13. An automobile comprising the power generation apparatus described in claim 12.

14. A method of producing a hydride of an organic compound, the method comprising: producing hydrogen using the method of producing hydrogen described in any one of claims 1 to 10; reducing an organic compound in presence of a metal catalyst using the obtained hydrogen as a reducing agent; and producing a hydride of the organic compound.
